# EUROPÄISCHE PATENTSCHRIFT

(11) **EP 3 702 632 B1**
(45) Veröffentlichungstag und Bekanntmachung des Hinweises auf die Patenterteilung: **03.11.2021**
(21) Anmeldenummer: 20020086.3
(22) Anmeldetag: 24.02.2020
(51) Int. Cl.: F16C 29/06, F16C 41/00, F16C 33/51

(54) **LINEARWÄLZFÜHRUNG MIT INTEGRIERTER DIAGNOSEVORRICHTUNG**
LINEAR ROLLER GUIDE WITH INTEGRATED DIAGNOSTIC DEVICE
GUIDE DE ROULEMENT LINÉAIRE POURVU DE DISPOSITIF DE DIAGNOSTIC INTÉGRÉ

(30) Priorität: 26.02.2019 CZ 20190112
(43) Veröffentlichungstag der Anmeldung: 02.09.2020
(73) Patentinhaber: Skoda Auto a.s., 29301 Mladá Boleslav (CZ)
(72) Erfinder: Jírová, Radka, CZ-40006 Ústí nad Labem (CZ); Jancák, Marek, CZ-29306 Kosmonosy (CZ); Pesík, Lubomír, CZ-046014 Liberec (CZ); Stávek, Martin, CZ-16300 Praha 6 (CZ)

(56) Entgegenhaltungen:
- DE-A1-102017 201 230
- DE-T2- 60 007 186

## Beschreibung

### Technisches Gebiet

Die Erfindung betrifft eine Linearwälzführung mit integrierter Diagnosevorrichtung.

### Bisheriger Stand der Technik

Bisher bekannte Linearwälzführungen mit integrierter Diagnosevorrichtung, wie beispielsweise in der Patentschrift JP2012193803A beschrieben, beruhen in der Regel auf den am Körper der Linearwälzführung angeschlossenen Vibrationssensoren. In diesem Fall gehen die gemessenen Vibrationen als Zeichen einer Störung der Linearwälzführung infolge ihrer dynamischen Betriebsbelastung unter und können insbesondere in dem Anfangsstadium der Störung nicht korrekt erkannt werden.

Ferner sind Lösungen bekannt, wie beispielsweise in der Patentschrift WO2018233750A1 angeführt, in denen unter stabilen Betriebsbedingungen ein zeitabhängiger Anstieg der Vibrationen aufgrund der allmählichen Steigerung des Rollwiderstandes infolge der Beschädigung der Wälzkörper oder der Oberflächen der Führungsstange erkannt wird. Angesichts der Betriebsbelastung sind auch diese Lösungen für die Feststellung der Beschädigung insbesondere in dem Anfangsstadium nicht ausreichend wirksam.

Die DE 600 07 186 T2 beschreibt eine geradlinige Wälzführungsvorrichtung, welche eine Führungsschiene und ein Schieberelement umfasst, das an der Führungsschiene angebracht ist. Wälzelemente der Wälzführungsvorrichtung sind in einem Wälzelementlaufzirkulationspfad angeordnet. Die Wälzelemente werden bei einer Bewegung des Schieberelements in Bezug zu der Führungsschiene in dem Wälzelementlaufzirkulationspfad zirkuliert. Wälzelementhalte-Abstandsstücke der Wälzführungsvorrichtung halten in Drehrichtung jeweils die Wälzelemente. Das jeweilige Wälzelementhalte-Abstandstück weist dicke Halteabschnitte auf, die zwischen Wälzelementen eingelegt sind, und dünne, gebogene Abschnitte zum Verbinden eines Paares dicker Halteabschnitte.

### Darstellung der Erfindung

Die genannten Nachteile beseitigt die erfindungsgemäße Linearwälzführung mit integrierter Diagnosevorrichtung, deren Darstellung darin liegt, dass der an der Führungsstange angeordnete Körper der Linearwälzführung wenigstens durch zwei separate Teile mit gemeinsamen Wälzelementen gebildet wird, von denen das eine Teil, das Tragteil, mit dem sich bewegenden Gegenstand verbunden ist und das zweite Teil, das Losteil, unbelastet bleibt.

Die Beschädigung der Linearwälzführung in ihrem Anfangsstadium wird durch den Vibrationssensor signalisiert, der an dem Losteil der Linearwälzführung mit integrierter Diagnosevorrichtung angeordnet ist.

In einer alternativen erfindungsgemäßen Ausführung ist zwischen dem Tragteil und dem Losteil ein federndes Dämmglied und ein Distanzsensor eingefügt.

In einer vorteilhaften Ausgestaltung sind an der Führungsstange neben dem Tragteil zwei Losteile mit zwei Vibrationssensoren angeordnet.

### Übersicht der Figuren der Zeichnungen

Die Erfindung wird näher anhand der Ausführungsbeispiele gemäß den beigefügten Zeichnungen erläutert, in denen zeigen die Fig. 1 eine Linearwälzführung mit integrierter Diagnosevorrichtung in perspektivischer und Schnittdarstellung mit radialem Vibrationssensor, die Fig. 2 eine alternative Ausführung der Linearwälzführung mit integrierter Diagnosevorrichtung in Schnittdarstellung mit eingefügtem radialen federnden Dämmglied und mit radialem Vibrationssensor, die Fig. 3 eine Linearwälzführung mit integrierter Diagnosevorrichtung in bevorzugter konstruktiven Anordnung mit eingefügtem axialen federnden Dämmglied und einem Distanzsensor, die Fig. 4 eine alternative Ausführung der Linearwälzführung mit integrierter Diagnosevorrichtung in erweiterter Anordnung mit beiderseitig eingefügten axialen federnden Dämmgliedern und einem axialen Vibrationssensor, die Fig. 5 eine alternative Ausführung der Linearwälzführung mit integrierter Diagnosevorrichtung in erweiterter Anordnung mit zwei Losteilen und zwei radialen Vibrationssensoren, die Fig. 6 eine alternative Ausführung der Linearwälzführung mit integrierter Diagnosevorrichtung in erweiterter Anordnung mit zwei Losteilen, zwei radialen Vibrationssensoren und zwei radialen federnden Dämmgliedern, die Fig. 7 eine alternative Ausführung der Linearwälzführung mit integrierter Diagnosevorrichtung in erweiterter Anordnung mit zwei Losteilen, zwei Distanzsensoren und drei axialen federnden Dämmgliedern und die Fig. 8 eine alternative Ausführung der Linearwälzführung mit integrierter Diagnosevorrichtung in erweiterter Anordnung mit zwei Losteilen, zwei axialen Vibrationssensoren und drei axialen federnden Dämmgliedern.

### Ausführungsbeispiel der Erfindung

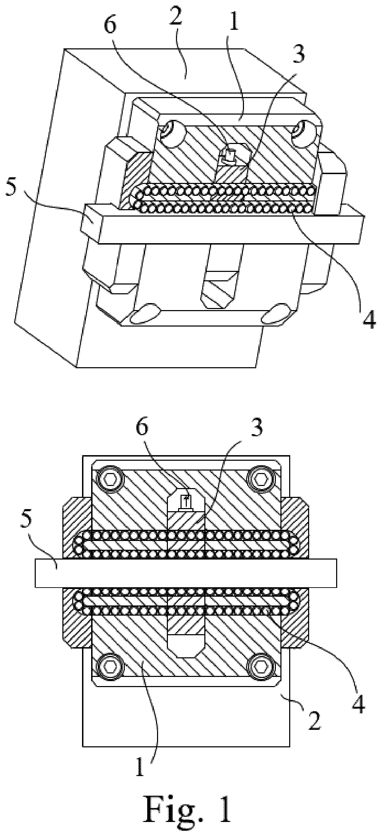

Die Fig. 1 zeigt eine erfindungsgemäße Linearwälzführung mit integrierter Diagnosevorrichtung gebildet durch ein mit dem Gegenstand 2 verbundenes Tragteil 1, ein Losteil 3 und gemeinsame Wälzelemente 4, die an der Führungsstange 5 angeordnet sind. An dem Losteil 3 ist ein radialer Vibrationssensor 6 angeordnet.

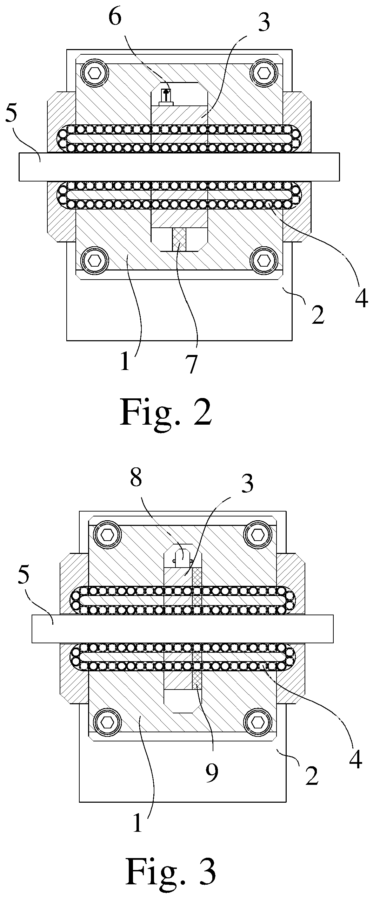

Die Fig. 2 zeigt eine alternative Ausführung der erfindungsgemäßen Linearwälzführung mit integrierter Diagnosevorrichtung gebildet durch ein mit dem Gegenstand 2 verbundenes Tragteil 1, ein Losteil 3 und gemeinsame Wälzelemente 4, die an der Führungsstange 5 angeordnet sind. An dem Losteil 3 ist ein radialer Vibrationssensor 6 angeordnet und zwischen dem Losteil 3 und dem Tragteil 1 ist ein radiales federndes Dämmglied 7 eingefügt.

Die Fig. 3 zeigt eine alternative Ausführung der erfindungsgemäßen Linearwälzführung mit integrierter Diagnosevorrichtung, gebildet durch ein mit dem Gegenstand 2 verbundenes Tragteil 1, ein Losteil 3 und gemeinsame Wälzelemente 4, die an der Führungsstange 5 angeordnet sind. An dem Losteil 3 ist ein Distanzsensor 8 angeordnet und zwischen dem Losteil 3 und dem Tragteil 1 ist ein axiales federndes Dämmglied 9 eingefügt.

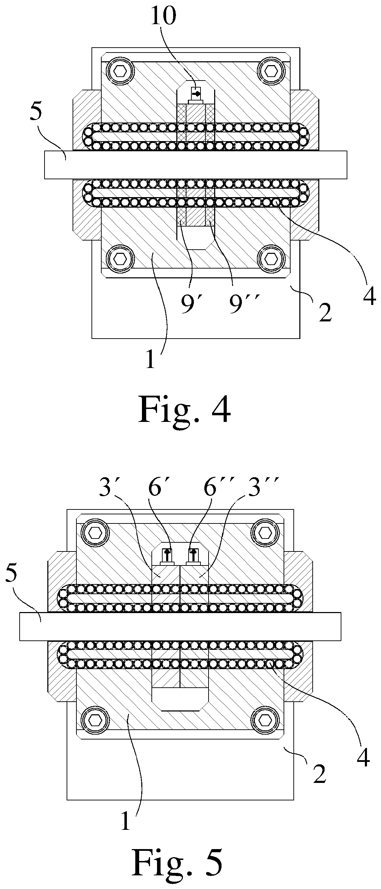

Die Fig. 4 zeigt eine alternative Ausführung der erfindungsgemäßen Linearwälzführung mit integrierter Diagnosevorrichtung, gebildet durch ein mit dem Gegenstand 2 verbundenes Tragteil 1, ein Losteil 3 und gemeinsame Wälzelemente 4, die an der Führungsstange 5 angeordnet sind. An dem Losteil 3 ist ein axialer Vibrationssensor 10 angeordnet und zwischen dem Losteil 3 und dem Tragteil 2 sind beiderseitig zwei federnde Dämmglieder 9' und 9'' angeordnet.

Die Fig. 5 zeigt eine alternative Ausführung der erfindungsgemäßen Linearwälzführung mit integrierter Diagnosevorrichtung, gebildet durch ein mit dem Gegenstand 2 verbundenes Tragteil 1, zwei Losteile 3' und 3'' und gemeinsame Wälzelemente 4, die an der Führungsstange 5 angeordnet sind. An den Losteilen 3' und 3'' sind radiale Vibrationssensoren 6' und 6'' angeordnet.

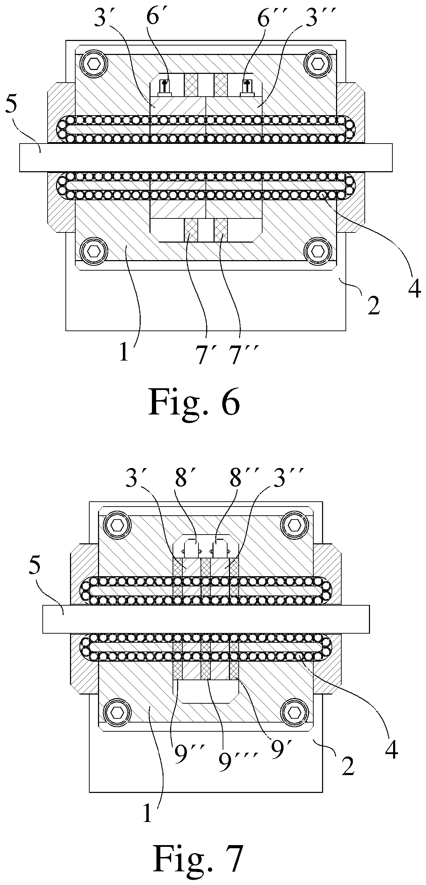

Die Fig. 6 zeigt eine alternative Ausführung der erfindungsgemäßen Linearwälzführung mit integrierter Diagnosevorrichtung, gebildet durch ein mit dem Gegenstand 2 verbundenes Tragteil 1, zwei Losteile 3' und 3'' und gemeinsame Wälzelemente 4, die an der Führungsstange 5 angeordnet sind. An den Losteilen 3' und 3'' sind radiale Vibrationssensoren 6' und 6'' angeordnet und zwischen den Losteilen 3' und 3'' und dem Tragteil 1 sind federnde Dämmglieder 7' und 7'' eingefügt.

Die Fig. 7 zeigt eine alternative Ausführung der erfindungsgemäßen Linearwälzführung mit integrierter Diagnosevorrichtung, gebildet durch ein mit dem Gegenstand 2 verbundenes Tragteil 1, zwei Losteile 3' und 3'' und gemeinsame Wälzelemente 4, die an der Führungsstange 5 angeordnet sind. An den Losteilen 3' und 3'' sind Distanzsensoren 8' und 8'' angeordnet und zwischen den Losteilen 3' und 3'' und dem Tragteil 1 sind beiderseitig federnde Dämmglieder 9' und 9'' eingefügt.

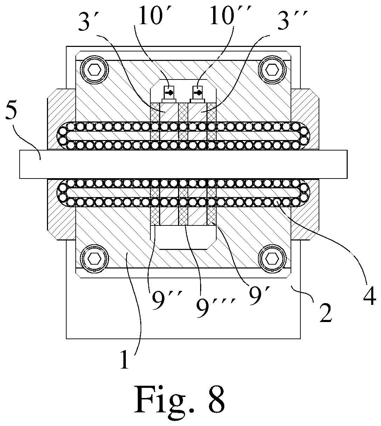

Die Fig. 8 zeigt eine alternative Ausführung der erfindungsgemäßen Linearwälzführung mit integrierter Diagnosevorrichtung, gebildet durch ein mit dem Gegenstand 2 verbundenes Tragteil 1, zwei Losteile 3' und 3'' und gemeinsame Wälzelemente 4, die an der Führungsstange 5 angeordnet sind. An den Losteilen 3' und 3'' sind axiale Vibrationssensoren 10' und 10'' angeordnet und zwischen den Losteilen 3' und 3'' und dem Tragteil 1 sind beiderseitig federnde Dämmglieder 9' und 9'' eingefügt.

Beim Betrieb einer näher nicht spezifizierten Förderanlage ist der beförderte Gegenstand 2 mit dem Tragteil 1 festverbunden, das somit beim Betrieb belastet ist und sich mit dem unbelasteten Losteil 3 mittels der gemeinsamen Wälzelemente 4 an der Führungsstange 5 bewegt. Das im Bereich des Tragteils 1 angeordnete Losteil 3 ist gleichen kinematischen Bedingungen wie das Tragteil 1 ausgesetzt, jedoch ohne Belastung. Sollte während des Betriebes der Anlage eine Beschädigung der gemeinsamen Wälzelemente 4 oder der Führungsstange 5 vorkommen, wird diese bereits im Anfangsstadium durch die Vibrationen des Losteils 3 signalisiert, die nur dieser Beschädigung entsprechen und nicht Bestandteil der betrieblichen Vibrationen sind, die sich an dem Tragteil 1 zeigen. Die Vibrationen des Losteils 3 werden mittels des radialen Vibrationssensors 6 aufgenommen. In einer erweiterten Ausführung ist zwischen dem Losteil 3 und dem Tragteil 1 ein radiales federndes Dämmglied 7 eingefügt, dessen Steifigkeit die mit dem radialen Vibrationssensor 6 aufgenommenen Vibrationen des Losteils 3 verstärken kann. In einer alternativen Ausführung, wo zwischen dem Losteil 3 und dem Tragteil 1 wenigstens ein axiales federndes Dämmglied 9', eventuell auch 9" eingefügt ist, zeichnet sich die Beschädigung der gemeinsamen Wälzelemente 4 oder der Führungsstange 5 mit erhöhtem Rollwiderstand, was eine Änderung der relativen Distanz des Tragteils 1 und des Losteils 3 verursacht, die durch den Distanzsensor 8 aufgenommen wird. Die Signale aus den Sensoren 6, bzw. 8 werden nachfolgend mit einer nicht näher beschriebenen Messvorrichtung bearbeitet und ausgewertet. Die Tatsache, dass das Losteil 3 nicht durch den Gegenstand 2 belastet wird, ermöglicht, dass die Vibrationen, eventuell der Rollwiderstand, des Losteils 3 bei einer Beschädigung leichter zu messen sind, als im Fall, wenn die Sensoren an dem belasteten Teil der Linearwälzführung angeordnet sind. In der Doppelanordnung sind in dem Tragteil 1 zwei Losteile 3' und 3'' angeordnet, die den gleichen kinematischen Bedingungen wie das Tragteil 1 ausgesetzt sind, jedoch ohne Belastung. Sollte während des Betriebes der Anlage eine Beschädigung der gemeinsamen Wälzelemente 4 oder der Führungsstange 5 vorkommen, wird diese bereits im Anfangsstadium durch die Vibrationen der Losteile 3' und 3'' signalisiert, die nur dieser Beschädigung entsprechen und nicht Bestandteil der betrieblichen Vibrationen sind, die sich an dem Tragteil 1 zeigen. Der Vorteil der Doppelanordnung liegt darin, dass die durch die radialen Vibrationssensoren 6' und 6'' aufgenommene Vibrationen der Loseteile 3' und 3'' neben den gemessenen Vibrationsamplituden auch die gegenseitige Phasen ausweisen, die man der Beschädigung der gemeinsamen Wälzelemente 4 oder der Führungsstange 5 bereits in einem Frühstadium zuordnen kann. In einer erweiterten Ausführung sind zwischen den Losteilen 3' und 3'' und dem Tragteil 1 radiale federnde Dämmglieder 7' und 7'' eingefügt, deren Steifigkeit die mit den radialen Vibrationssensoren 6' und 6'' aufgenommenen Vibrationen der Losteile 3' und 3'' verstärken können. In einer alternativen Ausführung, wo zwischen den Losteilen 3 und 3'' und dem Tragteil 1 axiale federnde Dämmglieder 9', 9'' und 9''' eingefügt sind, zeichnet sich die Beschädigung der gemeinsamen Wälzelemente 4 oder der Führungsstange 5 mit erhöhtem Rollwiderstand ab, was eine Änderung der relativen Distanz des Tragteils 1 und der Losteile 3' und 3'' verursacht, die durch die Distanzsensoren 8' und 8'' aufgenommen wird. Der Vorteil der Doppelanordnung liegt darin, dass die Veränderungen der durch die Distanzsensoren 8' und 8'' aufgenommenen relativen Distanzen der Losteile 3' und 3'' und dem Tragteil 1 neben den gemessenen Amplituden der relativen Distanzen auch die gegenseitigen Phasen ausweisen, die man der Beschädigung der gemeinsamen Wälzelemente 4 oder der Führungsstange 5 bereits in einem Frühstadium zuordnen kann. In ähnlicher Ausführung, wo zwischen den Losteilen 3' und 3'' und dem Tragteil 1 axiale federnde Dämmglieder 9', 9'' und 9''' eingefügt sind, zeichnet sich die Beschädigung der gemeinsamen Wälzelemente 4 oder der Führungsstange 5 durch die mit den axialen Vibrationssensoren 10' und 10'' aufgenommenen Vibrationen der Losteile 3' und 3'' ab. Der Vorteil der Doppelanordnung liegt darin, dass die durch die axiale Vibrationssensoren 10' und 10'' aufgenommenen Vibrationen der Losteile 3' und 3'' neben den gemessenen Vibrationsamplituden auch die gegenseitige Phasen ausweisen, die man der Beschädigung der gemeinsamen Wälzelemente 4 oder der Führungsstange 5 bereits in einem Frühstadium zuordnen kann.

### Bezugszeichenliste

- 1: Tragteil
- 2: Gegenstand
- 3: Losteil
- 4: gemeinsame Wälzelemente
- 5: Führungsstange
- 6: radialer Vibrationssensor
- 7: radiales federndes Dämmglied
- 8: Distanzsensor
- 9: axiales federndes Dämmglied
- 10: axialer Vibrationssensor

## Patentansprüche

1. Linearwälzführung gebildet durch ein Tragteil (1), das mittels Wälzelementen (4) an einer Führungsstange (5) angeordnet ist, wobei an der Führungsstange (5) an den gemeinsamen Wälzelementen (4) im Bereich des Tragteils (1) wenigstens ein Losteil (3) angeordnet ist, **dadurch gekennzeichnet, dass** die Linearwälzführung mit integrierter Diagnosevorrichtung ausgebildet ist, wobei
- das Losteil (3) wenigstens einen radialen Vibrationssensor (6) aufweist oder
- zwischen dem Tragteil (1) und dem Losteil (3) wenigstens ein axiales federndes Dämmglied (9) eingefügt ist und das Losteil (3) wenigstens einen Distanzsensor (8) aufweist oder
- zwischen dem Tragteil (1) und dem Losteil (3) wenigstens ein axiales federndes Dämmglied (9) eingefügt ist und das Losteil (3) wenigstens einen axialen Vibrationssensor (10) aufweist.

2. Linearwälzführung mit integrierter Diagnosevorrichtung nach Anspruch 1 **dadurch gekennzeichnet, dass** zwischen dem Tragteil (1) und dem den radialen Vibrationssensor (6) aufweisenden Losteil (3) wenigstens ein radiales federndes Dämmglied (7) eingefügt ist.

## Claims

1. A linear roller guide formed by a support part (1), which is arranged by means of roller elements (4) on a guide rod (5), wherein at least one loose part (3) is arranged on the guide rod (5) on the common roller elements (4) in the area of the support part (1), **characterized in that** the linear roller guide is designed with integrated diagnostic device, wherein
- the loose part (3) has at least one radial vibration sensor (6) or
- at least one axially resilient insulating member (9) is inserted between the support part (1) and the loose part (3) and the loose part (3) has at least one distance sensor (8) or
- at least one axially resilient insulating member (9) is inserted between the support part (1) and the loose part (3) and the loose part (3) has at least one axial vibration sensor (10).

2. The linear roller guide with integrated diagnostic device according to claim 1 **characterized in that** at least one radially resilient insulating member (7) is inserted between the support part (1) and the loose part (3) having the radial vibration sensor (6).

## Revendications

1. Guidage de laminage linéaire constitué d'un élément porteur (1), qui est disposé sur une tige de guidage (5) au moyen d'éléments de laminage (4),
dans lequel, sur la tige de guidage (5), sur les éléments de laminage communs (4) au niveau de l'élément porteur (1), est disposé au moins un élément libre (3), **caractérisé en ce que** le guidage de laminage linéaire est conçu avec un dispositif de diagnostic intégré, dans lequel
- l'élément libre (3) comprend au moins un capteur de vibrations radial (6) ou
- entre l'élément porteur (1) et l'élément libre (3) est inséré au moins un organe d'amortissement élastique axial (9) et l'élément libre (3) comprend au moins un capteur de distance (8) ou
- entre l'élément porteur (1) et l'élément libre (3) est inséré au moins un organe d'amortissement élastique axial (9) et l'élément libre (3) comprend au moins un capteur de vibrations axial (10).

2. Guidage de laminage linéaire avec dispositif de diagnostic intégré selon la revendication 1, **caractérisé en ce que**, entre l'élément porteur (1) et l'élément libre (3) comprenant le capteur de vibrations radial (6) est inséré au moins un organe d'amortissement élastique radial (7).
